# EUROPÄISCHE PATENTANMELDUNG

(11) **EP 4 438 973 A1**
(43) Veröffentlichungstag der Anmeldung: **02.10.2024**
(21) Anmeldenummer: 23165263.7
(22) Anmeldetag: 29.03.2023
(51) Int. Cl.: F24S 25/15, F24S 40/80, H02S 20/24

(54) **AUFSTÄNDERUNG FÜR MINDESTENS EIN SOLARMODUL**

(71) Anmelder: voestalpine Metal Forming GmbH, 3500 Krems an der Donau (AT)
(72) Erfinder: Wiemann, Marcus, 49324 Melle (DE); Gerstner, Florian, 73432 Aalen (DE)
(74) Vertreter: Jell, Friedrich

(57) **Zusammenfassung**

Es werden eine Aufständerung (2) für mindestens ein Solarmodul (3), insbesondere PV-Modul, und ein Solaranlage (1) mit dieser Aufständerung (2) gezeigt. Um Standfestigkeit gegenüber Windbelastungen zu erreichen, wird vorgeschlagen, dass die Aufständerung (2) ein, eine Ober- und Unterkante (14, 15) aufweisendes und längliches Windabweiselement (10a, 10b) aus einem Metallblech aufweist, das von der niedrigen Auflage (8a) des Halteelements (5) aus gesehen nach der höheren Auflage (8b) des Halteelements (5) angeordnet und an den Reihen (4a, 4b, 4c) über je eine Halterung (11a, 11b, 11c) befestigt ist, wobei jede Halterung (11a, 11b, 11c) zumindest zwei auf Abstand (AL) in Reihenlängserstreckung (L) der betreffenden Reihe (4a, 4b, 4c) nacheinander angeordnete und einander zugewandte Halteaufnahmen (12a, 12b) mit je einem Hinterschnitt (13a, 13b) aufweist, in welche Hinterschnitte (13a, 13b) entweder die Oberkante (14) oder die Unterkante (15) des Windabweiselements (10a, 10b) eingreifen, um das Windabweiselement (10a, 10b) an der Aufständerung (2) zu halten.

## Beschreibung

Die Erfindung betrifft eine Aufständerung für mindestens ein Solarmodul, insbesondere PV-Modul, mit mindestens zwei, mit einem Abstand nebeneinander sowie parallel zueinander verlaufenden Reihen mit je zumindest einem Halteelement aus einem Metallblech zur Befestigung des Solarmoduls, wobei das Halteelement eine, eine Aufstandsfläche für das Halteelement ausbildende Basis, und zwei, von der Basis unterschiedlich hoch vorspringende Auflagen für eine gegen die Aufstandsfläche geneigte Lage des auf den Auflagen aufliegenden Solarmoduls aufweist.

Um Solarmodule in einer sogenannten Süd-Ausrichtung in geneigter Lage aufzustellen, sind Aufständerungen mit in Reihen angeordneten Halteelementen bekannt, welche Solarmodule mit gleicher Neigung im Bereich von 6 bis 45 Grad hintereinander angeordnet tragen (EP3828479A1). Hierzu weisen die nebeneinander angeordneten Halteelemente jeweils eine Basis, welche die Aufstandsfläche für das Halteelement ausbildet, und zwei, von der Basis unterschiedlich hoch vorspringende Auflagen auf. Nachteilig besteht bei solch einer Aufständerung mit Süd-Ausrichtung eine vergleichsweise große Öffnung zwischen zwei hintereinander angeordneten Solarmodulen, was die Aufständerung anfällig gegenüber Windlast macht. Somit sind erhebliche konstruktive Maßnahmen an der Aufständerung notwendig, um die Solarmodule an der Aufständerung und die Aufständerung an einer Unterkonstruktion standfest zu halten.

Bei Aufständerungen aus einer Ständerkonstruktion ist es bekannt, jene sich durch eine Süd-Ausrichtung ergebenden Öffnungen in der Aufständerung mit einem Windleitblech als Windabweiselement zu verschließen (DE102010014859B4). Das Windleitblech ist an die Ständerkonstruktion mit einer Halterung aus Blindnieten befestigt - was nachteilig eines erheblichen Montageaufwands bedarf.

Die Erfindung hat sich daher die Aufgabe gestellt, ausgehend vom Stand der Technik eine gegenüber Windlasten standfeste Aufständerung zu schaffen, die vergleichsweise einfach zu montieren ist.

Die Erfindung löst die gestellte Aufgabe durch die Merkmale des Anspruchs 1.

Indem die Aufständerung ein, eine Ober- und Unterkante aufweisendes und längliches Windabweiselement aus einem Metallblech aufweist, das von der niedrigen Auflage des Halteelements aus gesehen nach der höheren Auflage des Halteelements angeordnet und an den Reihen über je eine Halterung befestigt ist, kann zunächst in bekannter Weise die Aufstellung gegenüber Windbelastungen standfester ausgebildet werden. Diese Ergänzung mit einem Windleitelement ist unter anderem in der Montage und Wartung besonders einfach handzuhaben, wenn jede Halterung zumindest zwei auf Abstand in Reihenlängserstreckung der betreffenden Reihe nacheinander angeordnete und einander zugewandte Halteaufnahmen mit je einem Hinterschnitt aufweist, in welche Hinterschnitte entweder die Oberkante oder die Unterkante des Windabweiselements eingreifen, um das Windabweiselement an der Aufständerung zu halten. Das Windabweiselement muss daher lediglich in die beiden Halteaufnahmen an jeder Reihe eingesetzt werden, was durch Einschieben, Einklicken etc. erfolgen kann. Schraubelemente, die Öffnungen zu durchgreifen haben, sind also nicht erforderlich, um das Windabweiselement an der Aufständerung zu befestigen - was auch deshalb von Vorteil ist, da bei derartigen Öffnungen Maßtoleranzen zu einem erheblichen Montageaufwand führen können. Die erfindungsgemäße Halterung mit Hinterschnitten ist im Gegensatz dazu gegenüber Maßtoleranzen vergleichsweise tolerant und stellt zudem einen einfache und schnelle Montagemöglichkeit sicher. Zudem kann diese erfindungsgemäße Montage des Windabweiselements hohe Windlasten aufnehmen - was eine gegenüber Windlasten besonders standfeste Aufständerung bedeutet.

Vorzugsweise liegt das Windabweiselement an einer Reihe anhand jeweils von den Hinterschnitten der Halteaufnahmen ausgebildeten Anlagenpunkten oder -flächen sowie anhand zumindest eines/einer dazwischen liegenden dritten Anlagenpunkts oder -fläche unter Biegebeanspruchung an. Auf diese Weise kann das montierte Windabweiselement an der Aufständerung verspannt werden - womit es möglich ist, die Standfestigkeit gegenüber Windbelastungen noch weiter zu erhöhen.

Vorstehendes wird beispielsweise weiter verbessert, indem das Windabweiselement über einen vierten dazwischen liegenden Anlagenpunkt oder eine vierte dazwischen liegende Anlagefläche an dieser Reihe unter Biegebeanspruchung anliegt.

Vorzugsweise weisen die Reihen je zwischen einander zugewandte Halteaufnahmen einen in Reihenlängserstreckung nach außen ausgebuchten Verlauf zum Anliegen der Windabweiselemente auf. Dies kann beispielsweise die Biegebeanspruchung der Windabweiselemente auf konstruktiv einfache Weise gelöst erhöhen.

Vorzugsweise weist das Windabweiselement eine Längssicke auf, um erhöhten Biegebelastungen durch Windlasten standzuhalten. Diese Längssicke kann mittig verlaufend und/oder auch offen ausgebildet sein, um die mechanische Stabilität weiter zu erhöhen. Beispielsweise handelt es sich bei der Längssicke um eine Trapezsicke.

Es kann vorgesehen sein, dass die Oberkante und/oder die Unterkante von einer Abkantung am Windabweiselement ausgebildet werden/wird, um die mechanische Stabilität des Windabweiselements in jenen Abschnitten zu erhöhen, in denen das Windabweiselement in die Halteaufnahmen eingreift. Die Standfestigkeit der Aufständerung gegenüber Windkräften ist damit weiter erhöhbar.

Die mechanische Stabilität des Windabweiselements kann weiter verbessert werden, wenn die Abkantung und die Längssicke am Windabweiselement gegensinnig orientiert eingebracht sind.

Die Konstruktion ist weiter vereinfachbar, wenn der Hinterschnitt von einer zu dessen Halteaufnahmen gebogenen Lasche ausgebildet wird. Auch kann diese Lasche verfahrenstechnisch reproduzierbar in das Metallblech des Halteelements oder eines Anschlusselements aus einem Metallblech eingebracht werden.

Vorzugsweise ist das Windabweiselement in der Halterung entlang seiner Längsrichtung verschiebbar gelagert, was die Montage des Windabweiselement und auch deren Austausch besonders erleichtern kann. Im Speziellen kann damit auch die Montage einfacher erfolgen, da diese unabhängiger von Maßtoleranzen und auch gegenüber Montagefehlern in der Ausrichtung der beiden Reihen zueinander wird.

Die Montage kann beispielsweise weiter erleichtert werden, wenn die Oberkante und/oder die Unterkante des Windabweiselements zumindest über den Bereich der Halteaufnahmen, insbesondere über die gesamte Länge des Windabweiselements, gerade verlaufen/verläuft. Dies umso mehr, wenn dieser Verlauf der Oberkante und/oder Unterkante des Windabweiselements über die gesamte Länge des Windabweiselements vorgesehen ist.

Vorzugsweise befinden sich die einander gegenüberliegenden Halteaufnahmen am Halteelement. Vorzugsweise werden die gegenüberliegenden Halteaufnahmen vom Metallblech des Halteelements ausgebildet.

Es ist aber auch vorstellbar, dass sich die einander gegenüberliegenden Halteaufnahmen an einem Anschlusselement aus einem Metallblech angeordnet sind, welches Anschlusselement an das Halteelement anschließt. Vorzugsweise werden diese einander gegenüberliegenden Halteaufnahmen vom Metallblech des Anschlusselements ausgebildet.

Vorzugsweise sind die Halterungen zur Aufnahme von zwei sich überlappenden Windabweiselementen ausgebildet, um damit Maßtoleranzen bei der Montage handhabungsfreundlich ausgleichen zu können.

Dies ist insbesondere dann von Vorteil, wenn die Aufständerung zumindest drei Reihen aufweist, und in zumindest zwei der einander zugewandten Halteaufnahmen der Halterung der zweiten Reihe, die zwischen der ersten und zweiten Reihe angeordnet ist, zwei sich überlappende Windabweiselemente eingreifen.

Die Halterungen können mechanisch standfester ausgebildet werden, wenn jede Halterung mehrere Paare aus zwei sich einander in Längsrichtung direkt gegenüberliegenden Halteaufnahmen der Halterungen aufweist.

Das erfindungsgemäße Windabweiselement eignet sich insbesondere für eine Solaranlage mit mindestens einem Solarmodul, das an der Aufständerung befestigt ist.

In den Figuren ist beispielsweise der Erfindungsgegenstand anhand einer Ausführungsvariante näher dargestellt. Es zeigen
Fig. 1 eine dreidimensionale Ansicht auf eine Solaranlage mit einer Aufständerung,
Fig. 2 eine Seitenansicht auf eine Reihe der Aufständerung nach Fig. 1,
Fig. 2a, 2b vergrößerte Detailansichten der Fig. 2,
Fig. 3 eine Seitenansicht zu einer Montage von zwei Windabweiselementen an der Aufständerung nach Fig. 1 und
Fig. 4 eine Draufsicht auf die nach Fig. 3 montierten Windabweiselemente.

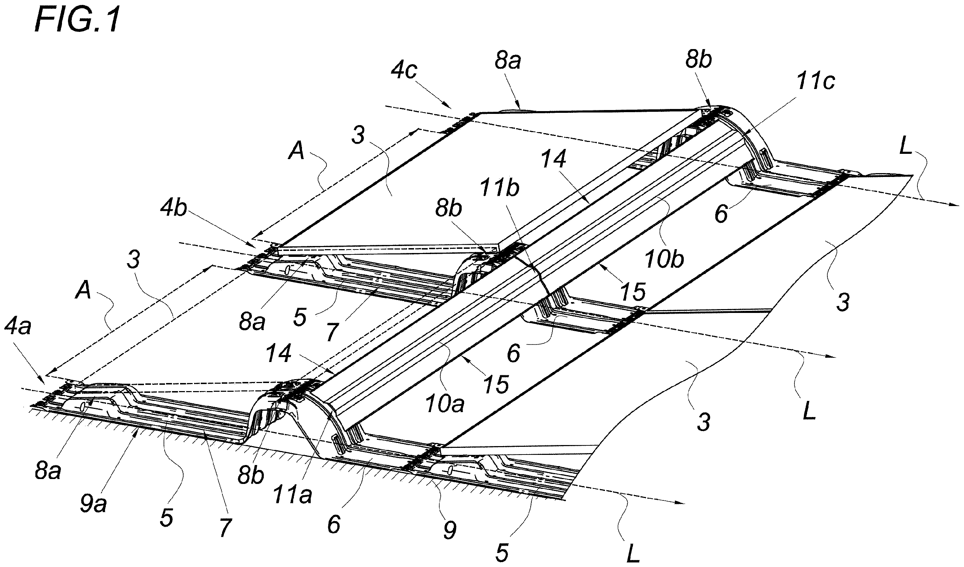

Nach Fig. 1 ist beispielsweise eine teilweise fertiggestellte Solaranlage 1 dargestellt, die eine Aufständerung 2 und mehrere Solarmodule 3, nämlich PV-Module, aufweist. Drei Solarmodule sind bereits - teilweise abgerissen dargestellt - auf der Aufständerung 2 befestigt, ein links unten an der Aufständerung 2 vorzusehendes viertes Solarmodul ist in Strichlinien andeutungsweise nicht dargestellt.

Die dargestellte Aufständerung 2 weist drei nebeneinander auf Abstand A und parallel verlaufende Reihen 4a, 4b, 4c auf, welche ident ausgebildet sind. Hierzu weisen die Reihen 4a, 4b, 4c jeweils abwechselnd aufeinanderfolgend Halteelemente 5 aus einem Metallblech und Anschlusselemente 6 aus einem Metallblech auf. Das Anschlusselement 6 verbindet die Halteelemente 5 einer Reihe 4a, 4b, 4c untereinander - was aber in einer alternativen und nicht dargestellten Ausführung nicht zwingend vorgesehen sein muss, wenn die nicht dargestellten Halteelemente in ihrer Ausformung auch das Anschlusselement ausbilden. Daher ist auch vorstellbar, dass die Reihen 4a, 4b, 4c je von zumindest einem Halteelement 5 ausgebildet werden, was nicht dargestellt ist. Die Reihen 4a, 4b, 4c können auch je zumindest ein Halteelement 5 und zumindest ein Anschlusselement 6 aufweisen. Damit ergeben sich an der Aufständerung 2 durchgehende Reihen 4a, 4b, 4c zur Befestigung der Solarmodule 3. Die nebeneinander in Reihen angeordneten Halteelemente 5 weisen jeweils eine Basis 7 für eine Aufstandsfläche 9a des Halteelements 5 auf dem Untergrund 9 auf - und zwei, von der Basis 7 unterschiedlich hoch vorspringende Auflagen 8a, 8b, wobei davon die zweite Auflage 8b im Vergleich zur ersten Auflage 8a höher vorspringt. Hierfür sind die Halteelemente 5 der jeweiligen Reihen 4a, 4b, 4c ohne Versatz zueinander ausgerichtet und liegen somit direkt nebeneinander auf Abstand A.

Damit ergibt sich eine gegen die Aufstandsfläche 9a geneigte Lage des darauf aufliegenden Solarelements 3.

Wie in der Fig. 1 an der oberen Kante der Solarmodule 3 zu erkennen, ergeben sich Öffnungen in der Aufständerung 2, in der nachteilig Wind unterhalb der Solarmodule 3 eintreten kann.

Erfindungsgemäß werden diese Öffnungen mit je einem länglichen Windabweiselement 10a, 10b aus einem Metallblech verkleinert und damit verschlossen. Die Windabweiselemente 10a, 10b sind von den niedrigen ersten Auflagen 8a der Halteelemente 5 aus gesehen - in Reihenlängserstreckung (L) - nach den höheren zweiten Auflagen 8b der Halteelemente 5 angeordnet und an den Reihen 4a, 4b bzw. 4b, 4c über je eine Halterung 11a, 11b, 11c befestigt.

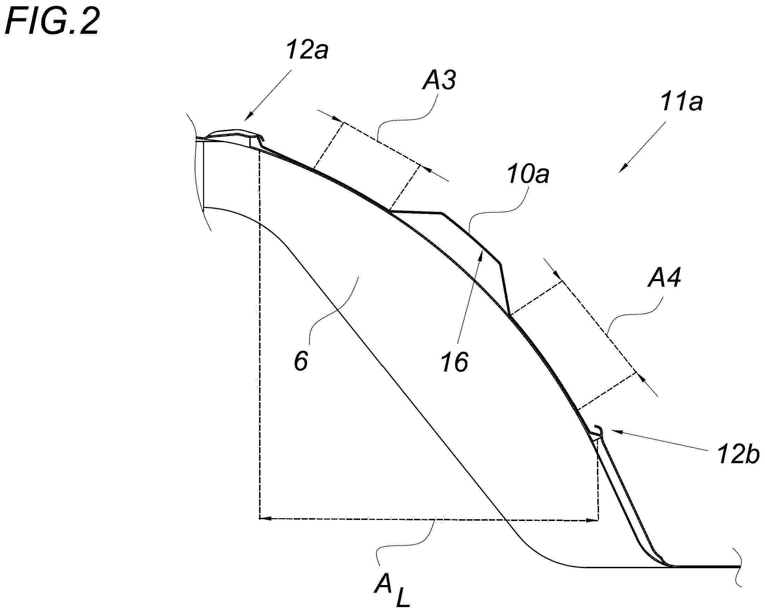

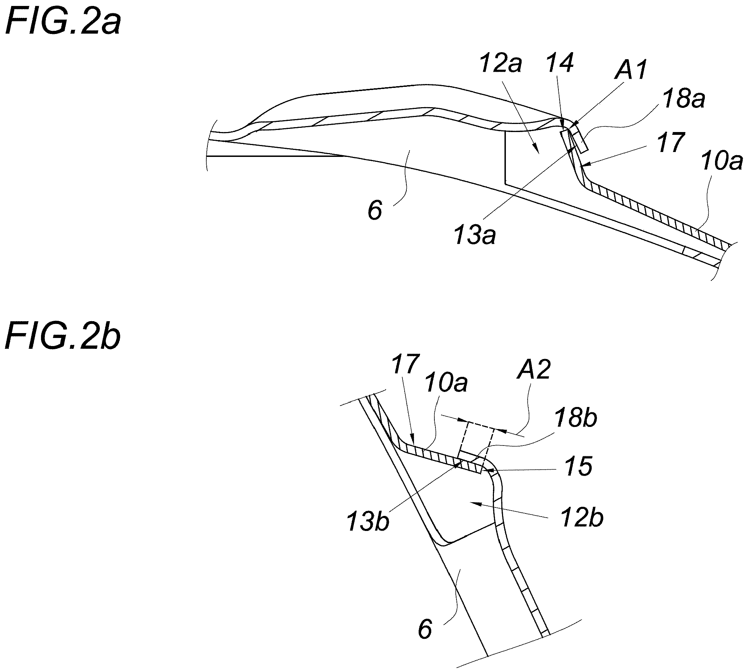

Diese erste, zweite und dritte Halterung 11a, 11b, 11c sind ident aufgebaut. So weist jede dieser Halterungen 11a, 11b, 11c zumindest zwei Halteaufnahmen 12a, 12b mit je einem Hinterschnitt 13a, 13b auf. Diese Halteaufnahmen 12a, 12b sind auf Abstand A_{L} in Reihenlängserstreckung L der betreffenden Reihe 4a, 4b, 4c nacheinander angeordnete und einander zugewandt - wie in den Figuren 2, 2a und 2b zu erkennen. Diese zwei Halteaufnahmen 12a, 12b bilden damit an der jeweiligen Halterungen 11a, 11b, 11c jeweils ein Paar 12, wobei hierbei vorzugsweise die zwei Halteaufnahmen 12a, 12b jedes Paar 12 einander direkt gegenüberliegen.

In die Hinterschnitte 13a, 13b an jeder Reihe 4a, 4b, 4c greifen die Oberkante 14 oder die Unterkante 15 der Windabweiselemente 10a, 10b ein - was diese an der Aufständerung 2 festhält. Damit sind die Windabweiselemente 10a, 10b bei der Montage vergleichsweise einfach zu montieren, aber auch standfest an der Aufständerung 2 befestigt und können so hohen Windkräften standhalten.

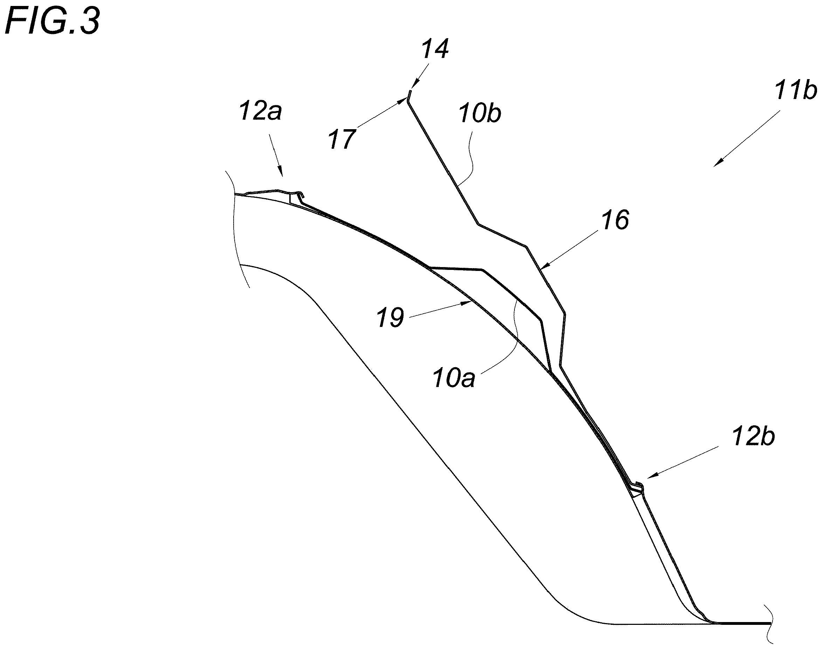

Die Windabweiselemente 10a, 10b liegen aber nicht nur an den Hinterschnitten 13a, 13b an den Anschlusselementen 6 an und weisen damit eine erste und zweite Auflagefläche A1, A2 auf. Die Windabweiselemente 10a, 10b liegen außerdem auch noch an der jeweiligen Reihe 4a, 4b, 4c mit zwei weiteren Anlagenflächen A3, A4 an. Diese dritte und vierte Anlagenfläche A3, A4 sind zwischen den Hinterschnitten 13a, 13b angeordnet - siehe hierzu die Figuren 2, 2a und 2b. Dieses Anliegen erfolgt unter Biegespannung des Windabweiselements 10a, 10b, was dieses damit äußerst fest an der Aufständerung 2 hält - wie in Fig. 3 zu erkennen. Anhand Fig. 3 ist dargestellt, dass die Oberkante 14 des Windabweiselements 10b in der Halteaufnahmen 12a noch nicht hineingebogen worden ist. Diese für ein Hineinbiegen erforderliche Biegung der Windabweiselemente 10a, 10b verspannt diese in den Halteaufnahmen 12a, 12b. In Fig. 3 sind beispielsweise beide Windabweiselemente 10a, 10b dargestellt. Es versteht sich von selbst, dass dieses Verspannen auch dann eintritt, wenn die Halterungen 11a, 11b, 11c nur ein einziges Windabweiselement 10a hält. Dieses Anliegen unter Biegebeanspruchung garantiert zudem Spielfreiheit, was bei Windlast unter anderem eine unerwünschte Geräuschentwicklung vermeiden kann.

Zudem weisen -wie in Fig. 3 beispielsweise zu erkennen, die Anschlusselementen 6 bzw. die Reihen 4a, 4b, 4c je zwischen den einander zugewandte Halteaufnahmen 12a, 12b einen in Reihenlängserstreckung L nach außen ausgebuchten Verlauf 19 zum Anliegen der Windabweiselemente 10a, 10b auf, was deren Halt der Windabweiselemente 10a, 10b an der Aufständerung 2 weiter verbessert.

Die Biegespannung wird über eine offene und mittig verlaufende Längssicke 16, nämlich Trapezsicke, an dem betreffenden Windabweiselement 10a, 10b eingestellt. Hierzu trägt weiter bei, dass die Oberkante 14 und die Unterkante 15 von einer Abkantung 17 am Windabweiselement 10a, 10b ausgebildet werden, wobei die Abkantungen 17 und die Längssicke 16 am Windabweiselement 10a, 10b gegensinnig orientiert sind.

Konstruktiv einfach gelöst, werden die Hinterschnitte 13a, 13b von je einer zu ihren Halteaufnahmen 12a, 12b hin gebogenen Lasche 18a, 18b ausgebildet. Diese Laschen 18a, 18b werden mit einem Blechumformverfahren in das Metallblech der Anschlusselemente 6 eingebracht und sind folglich kostengünstig und standfest herzustellen.

Wie auch in den Figuren 1 bis 4 erkennbar, sind die Windabweiselemente 10a, 10b in der Halterung 11a, 11b, 11c in ihrer Längsrichtung W_{L} verschiebbar gelagert. Es ergibt sich daher eine Art Linearlager - was die Lage der Windabweiselemente 10a, 10b einfach korrigieren lässt. Zudem verlaufen die Oberkante 14 und die Unterkante 15 jedes Windabweiselements 10a, 10b über die gesamte Länge des Windabweiselements gerade - was die Montage noch weiter erleichtert.

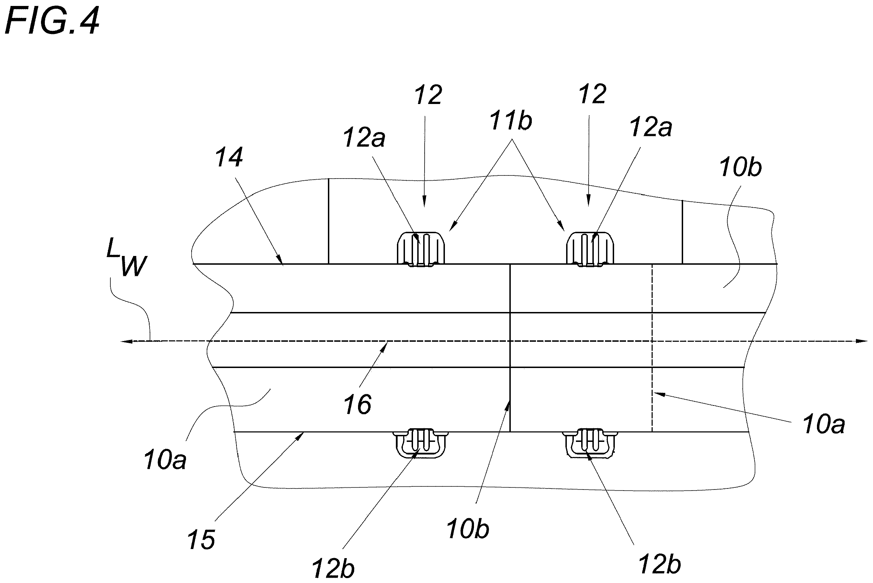

Dieses Linearlager ist auch gegen Verkippen gesichert, indem zwei Paaren 12 an Halteaufnahmen 12a, 12b an jeder Halterung 11a, 11b, 11c vorgesehen sind - wie in Fig. 4 dargestellt.

In den Figuren 3 und 4 ist zudem zu erkennen, dass sich die beiden Windabweiselemente 10a, 10b in der zweiten Halterung 11b überlappen - was standfest die Aufständerung 2 gegenüber Windbelastungen schützt. Dies ist in Fig. 4 daran zu erkennen, dass im linken Paar 12 der zwei einander zugewandten Halteaufnahmen 12a, 12b das erste und das zweite Windabweiselement 10a, 10b in die diesbezüglichen Hinterschnitte 13a, 13b eingreifen. Wie in Fig. 3 dargestellt, liegen damit beide Windabweiselemente 10a, 10b dort unter Biegespannung an - was diese standfest an der Aufständerung 2 hält. Auch kann diese Konstruktion verschieden lange Windabweiselemente 10a, 10b zur Verwendung zulassen bzw. Montageungenauigkeit, beispielsweise im Abstand A Reihen 4a, 4b, 4c zueinander, handhabungsfreundlich ausgleichen.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Aufständerung für mindestens ein Solarmodul (3), insbesondere PV-Modul, mit mindestens zwei, mit einem Abstand (A) nebeneinander sowie parallel zueinander verlaufenden Reihen (4a, 4b, 4c) mit je zumindest einem Halteelement (5) aus einem Metallblech zur Befestigung des Solarmoduls (3), wobei das Halteelement (5) eine, eine Aufstandsfläche (9a) für das Halteelement (5) ausbildende Basis (7), und zwei, von der Basis (7) unterschiedlich hoch vorspringende Auflagen (8a, 8b) für eine gegen die Aufstandsfläche (9a) geneigte Lage des auf den Auflagen (8a, 8b) aufliegenden Solarmoduls (3) aufweist, **dadurch gekennzeichnet, dass** die Aufständerung (2) ein, eine Ober- und Unterkante (14, 15) aufweisendes und längliches Windabweiselement (10a, 10b) aus einem Metallblech aufweist, das von der niedrigen Auflage (8a) des Halteelements (5) aus gesehen nach der höheren Auflage (8b) des Halteelements (5) angeordnet und an den Reihen (4a, 4b, 4c) über je eine Halterung (11a, 11b, 11c) befestigt ist, wobei jede Halterung (11a, 11b, 11c) zumindest zwei auf Abstand (A_{L}) in Reihenlängserstreckung (L) der betreffenden Reihe (4a, 4b, 4c) nacheinander angeordnete und einander zugewandte Halteaufnahmen (12a, 12b) mit je einem Hinterschnitt (13a, 13b) aufweist, in welche Hinterschnitte (13a, 13b) entweder die Oberkante (14) oder die Unterkante (15) des Windabweiselements (10a, 10b) eingreifen, um das Windabweiselement (10a, 10b) an der Aufständerung (2) zu halten.

2. Aufständerung nach Anspruch 1, **dadurch gekennzeichnet, dass** das Windabweiselement (10a, 10b) an einer Reihe (4a, 4b, 4c) anhand jeweils von den Hinterschnitten (13a, 13b) der Halteaufnahmen (12a, 12b) ausgebildeten Anlagenpunkten oder -flächen (A1, A2) sowie anhand zumindest eines/einer dazwischen liegenden dritten Anlagenpunkts oder -fläche (A3) unter Biegebeanspruchung anliegt.

3. Aufständerung nach Anspruch 2, **dadurch gekennzeichnet, dass** das Windabweiselement (10a, 10b) über einen vierten dazwischen liegenden Anlagenpunkt (A4) oder eine vierte dazwischen liegende Anlagefläche (A4) an dieser Reihe (4a, 4b, 4c) unter Biegebeanspruchung anliegt.

4. Aufständerung nach einem der Ansprüche 1 bis 3, **dadurch gekennzeichnet, dass** die Reihen (4a, 4b, 4c) je zwischen einander zugewandte Halteaufnahmen (12a, 12b) einen in Reihenlängserstreckung (L) nach außen ausgebuchten Verlauf (19) zum Anliegen der Windabweiselemente (10a, 10b) aufweisen.

5. Aufständerung nach einem der Ansprüche 1 bis 4, **dadurch gekennzeichnet, dass** das Windabweiselement (10a, 10b) eine, insbesondere offene und/oder mittig verlaufende, Längssicke (16), insbesondere Trapezsicke, aufweist.

6. Aufständerung nach einem der Ansprüche 1 bis 5, **dadurch gekennzeichnet, dass** die Oberkante (14) und/oder die Unterkante (15) von einer Abkantung (17) am Windabweiselement (10a, 10b) ausgebildet werden/wird.

7. Aufständerung nach Anspruch 6, **dadurch gekennzeichnet, dass** die Abkantungen (17) und die Längssicke (16) am Windabweiselement (10a, 10b) gegensinnig orientiert eingebracht sind.

8. Aufständerung nach einem der Ansprüche 1 bis 7, **dadurch gekennzeichnet, dass** der Hinterschnitt (13a, 13b) von einer zu dessen Halteaufnahmen (12a, 12b) gebogenen Lasche (18a, 18b) ausgebildet wird.

9. Aufständerung nach einem der Ansprüche 1 bis 8, **dadurch gekennzeichnet, dass** das Windabweiselement (10a, 10b) in der Halterung (11a, 11b, 11c) entlang seiner Längsrichtung (LW) verschiebbar gelagert ist.

10. Aufständerung nach Anspruch 9, **dadurch gekennzeichnet, dass** die Oberkante (14) und/oder die Unterkante (15) des Windabweiselements (10a, 10b) zumindest im Bereich der Halteaufnahmen (12a, 12b), insbesondere über die gesamte Länge des Windabweiselements (10a, 10b), gerade verlaufen/verläuft.

11. Aufständerung nach einem der Ansprüche 1 bis 10, **dadurch gekennzeichnet, dass** die sich einander gegenüberliegenden Halteaufnahmen (12a, 12b) entweder am Halteelement (5) oder an einem an das Halteelement (5) angeschlossenen Anschlusselement (6) aus einem Metallblech angeordnet sind, insbesondere von diesen ausgebildet werden.

12. Aufständerung nach einem der Ansprüche 1 bis 11, **dadurch gekennzeichnet, dass** die Halterungen (11a, 11b, 11c) zur Aufnahme von zwei sich überlappenden Windabweiselementen (10a, 10b) ausgebildet sind.

13. Aufständerung nach Anspruch 12, **dadurch gekennzeichnet, dass** die Aufständerung zumindest drei Reihen (4a, 4b, 4c) aufweist, und dass in zumindest zwei der einander zugewandten Halteaufnahmen (12a, 12b) der Halterung (11b) der zweiten Reihe (4b), die zwischen der ersten und zweiten Reihe (4a, 4b) angeordnet ist, zwei sich überlappende Windabweiselemente (10a, 10b) eingreifen.

14. Aufständerung nach einem der Ansprüche 1 bis 13, **dadurch gekennzeichnet, dass** jede Halterungen (11a, 11b, 11c) mehrere Paare (12) aus zwei sich einander in Längsrichtung (L) direkt gegenüberliegende Halteaufnahmen (12a, 12b) der Halterungen (11a, 11b, 11c) aufweist.

15. Solaranlage mit mindestens einem Solarmodul (3) und mit einer Aufständerung (2) nach einem der Ansprüche 1 bis 14, an dem das Solarmodul (3) befestigt ist.
